# EUROPEAN PATENT APPLICATION

(11) **EP 3 024 255 A1**
(43) Date of publication of application: **25.05.2016**
(21) Application number: 15194039.2
(22) Date of filing: 11.11.2015
(51) Int. Cl.: H04W 4/00, G06Q 10/06

(54) **COLLECTION OF FIELD MEASUREMENT DATA USING A PRE-DEFINED WORKFLOW**

(30) Priority: 21.11.2014 US 201414550663
(71) Applicant: General Electric Company, Schenectady, NY 12345 (US)
(72) Inventor: CITRINITI, Thomas D., Niskayuna, NY New York 12309 (US); LAFLEN, John Brandon, Niskayuna, NY New York 12309 (US); BROOKSBY, Glen William, Niskayuna, NY New York 12309 (US)
(74) Representative: Bedford, Grant Richard

(57) **Abstract**

Aspects of the present disclosure relate to the use of a mobile computing device 132 to implement a workflow to be followed when conducting an examination of installed equipment 140 on-site. The workflow may be generated remote from the equipment site and specifies an order in which measurements may be obtained. The workflow may incorporate formulas or equations for processing some or all of the measurements and which may be evaluated on the mobile device 132 itself.

## Description

The present disclosure relates generally to an approach for performing field evaluation of devices and systems and, in particular, to instances in which numerous measurements may be taken for diagnostic or maintenance purposes.

Various physical assets and physical systems (such as industrial or commercial equipment or machinery) may be substantially fixed in place or otherwise not suitable to be moved for maintenance or diagnostic evaluation. In such contexts, a field inspector may instead perform site visits as needed to perform maintenance or evaluation of such systems. As part of such a visit, the field inspector may make various physical measurements or observations of the system or components of the systems or may perform other evaluation steps to determine that the system is working properly, or, if not, to diagnose the system.

In practice, the measurements or observations to be made may involve a using instruments or performing visual observations. In addition, different field inspectors may have different orders in which they prefer to make a given set of measurements, which may differ from the order specified by offsite design personnel or by a standard operating procedure. Further, in practice the measurements and observations may be recorded on paper, such as by writing down measurements as they are acquired on a written checklist. Such paper-based recording mechanisms may be inefficient and may require subsequent transcription into an electronic database or report.

In one embodiment, a method for acquiring sequential measurements is provided. In accordance with this method, on a mobile processor-based system, a workflow generated at a remote site is received. The workflow comprises a sequence of measurements to be obtained. The workflow is displayed on the mobile processor-based system. In the sequence specified by the workflow, a plurality of measurements are received and entered. As each measurement is received, the respective measurement or a value derived from the respective measurement is displayed in a corresponding field of the displayed workflow.

In a further embodiment, a processor-based device is provided. The processor-based device includes a display, a communication interface, a memory storing one or more routines, and a processing component configured to execute the one or more routines stored in the memory. The one or more routines, when executed by the processing component, cause the processing component to: receive a workflow via the communication interface, wherein the workflow comprises a sequence of measurements to be obtained; display the workflow on the display; receive and enter a plurality of measurements in the sequence specified by the workflow, wherein some or all of the measurements are received wirelessly via the communication interface; and display the respective measurement or a value derived from the respective measurement in a corresponding field of the displayed workflow.

In an additional embodiment, a non-transitory, tangible computer-readable medium encoding processor-executable routines is provided. The routines, when executed by a processor cause acts to be performed including: receiving a workflow specifying a sequence of measurements to be obtained, wherein the workflow comprises a table or is generated from the table; displaying the sequence of measurements on a display of a mobile device; wirelessly receiving and entering one or more measurements in the sequence specified by the workflow; and as each measurement is received, displaying the respective measurement or a value derived from the respective measurement in a corresponding field of the displayed workflow.

Various features, aspects, and advantages of the present invention will become better understood when the following detailed description is read with reference to the accompanying drawings in which like characters represent like parts throughout the drawings, wherein:
FIG. 1 is an illustration of an environment containing physical assets being monitored by field inspectors, in accordance with aspect of the present disclosure;
FIG. 2 is a block diagram of an electronic device that may used in the implementation of certain of the operations disclosed herein, in accordance with aspects of the present disclosure;
FIG. 3 depicts a process flow for generating a workflow and implementing the workflow on a remote device, in accordance with aspects of the present disclosure;
FIG. 4 depicts a process flow demonstrating the implementation of a workflow on a remote device, in accordance with aspects of the present disclosure;
FIG. 5 depicts a first screen shot of a workflow implemented on a mobile device, in accordance with aspects of the present disclosure;
FIG. 6 depicts a second screenshot of the workflow of FIG. 5 after reordering, in accordance with aspects of the present disclosure;
FIG. 7 depicts a third screenshot of the workflow of FIG. 6 after input of measurements, in accordance with aspects of the present disclosure; and
FIG. 8 depicts a fourth screenshot of the workflow of FIG. 7 after execution of one or more formulas within the workflow, in accordance with aspects of the present disclosure.

One or more specific embodiments will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said", when present, are intended to convey that there are one or more of the referenced elements, unless the context clearly dictates otherwise. The terms "comprising," "including," and "having", when used, are intended to be inclusive and mean that there may be additional elements other than the listed elements. The modifiers "optional" or "optionally" means that the subsequently described event or circumstance may or may not occur, and that the description includes instances where the event occurs and instances where it does not.

Further, any numerical examples in the following discussion are intended to be nonlimiting, and thus additional numerical values, ranges, and percentages are within the scope of the disclosed embodiments. Furthermore, here and throughout the specification and claims, range limitations may be combined and/or interchanged to identify various sub-ranges or combined ranges. Such ranges should be understood as being identified and as including all the sub-ranges contained therein unless context or language indicates otherwise.

Approximating language, as used herein throughout the specification and claims, may be applied to modify any quantitative representation that could permissibly vary without resulting in a change in the basic function to which it is related. Accordingly, a value modified by a term or terms, such as "about", "approximately", "proximate to", and "substantially", are not to be limited to the precise value specified or employed as an example. In at least some instances, the approximating language may correspond to the precision of an instrument or operation for measuring the value or the common variances typically associated with a given observation or measurement. Such variance may be attributable to the calibration or mis-calibration of a given measurement devices, manufacturing tolerances associated with a given measuring device, user subjectivity or variation present when obtaining a measurement, rounding of measurements, and so forth. That is, approximating language as used herein is intended to cover at least the degree to which observations or measurements are typically known to vary due to limitations of the measurement device, operator, or due to the conditions under which measurements are made (such as when a piece of equipment is in operation).

With the preceding in mind, the present disclosure relates various approaches for providing a workflow for inspection of a piece of equipment, such as by a field inspector, and for designing such a workflow, such as by a design engineer at a different site. In certain implementations, a workflow (e.g., an order or sequence in which measurements or observations are to be made with respect to equipment undergoing inspection) may be initially defined at one site, such as using a suitable application, such as a spreadsheet application in some embodiments. For example, in such a development implementation, a design engineer may, list a sequence of measurements or observations to be obtained by a field inspector on site with a piece of equipment undergoing evaluation. The design engineer may also define or embed formulas or equations, such as in an adjacent cell in a spreadsheet implementation, which may be executed or otherwise implemented to process a measurement or observation obtained by the field inspector. For example, such a formula may convert the measurement(s) or observation(s) to a different or processed form that may be of more diagnostic interest than the raw data value themselves, may compare the measured values or observations to a threshold value or other alert condition to determine whether the an alert or out-of-bounds indication should be indicated, and/or may perform a calibration adjustment to the measured or observed values based on known calibration parameters for the measurement device employed or for the equipment being serviced.

In certain described embodiments, the workflow defined by the design engineer may be transferred to a mobile device to be used by the field inspector during an inspection. For example, the workflow, when transferred to the mobile device may be configured to run as a stand-alone application, or may be provided as an input or template to an application already present on the device. For example, in certain embodiments, the workflow may be provided as a spreadsheet that is executable by a suitable application running on the mobile device. In this manner, the device may be configured or otherwise programmed to display, or otherwise utilize, the workflow as part of the inspection process, such as by prompting the field engineer to acquire measurements or observations in a specified order. In certain embodiments, the field inspector may be allowed to alter the order based on circumstances present at the location of the equipment or based on personal preference or experience.

In one implementation, the field inspector may use one or more measurement devices that communicate with the application (such as wirelessly) to input measurements into the corresponding fields of the displayed workflow as the measurements are generated by the measurement device. However, in other implementations the measurements or observations may be provided to the workflow application in other ways, such as via entry using one or more input mechanisms provided on the mobile device, including touch screen inputs, physical keys or buttons, or a microphone (i.e., voice or verbal inputs).

In certain embodiments, the mobile device, via the loaded workflow or an application processing the workflow, may perform additional processing of certain of the measurements or observations provided as inputs to the workflow. For example, as noted above, a measurement (i.e., a raw measurement) may be processed to generate one or more derived measurements or processed values that may be of more diagnostic interest than the raw measurements themselves and/or which represent calibrated or adjusted values taking into account a known calibration of the measurement device. Such processing may be implemented by the application running on the mobile device, such as by executing one or more formulas or equations defined by the design engineer and provided to the mobile device as part of the workflow. Likewise, raw or processed measurements may be evaluated, such as using formulas or thresholds provided as part of the workflow (e.g., defined on one or more associated cells of a spreadsheet defining the workflow), to determine whether an alert or out-of-bounds condition exists.

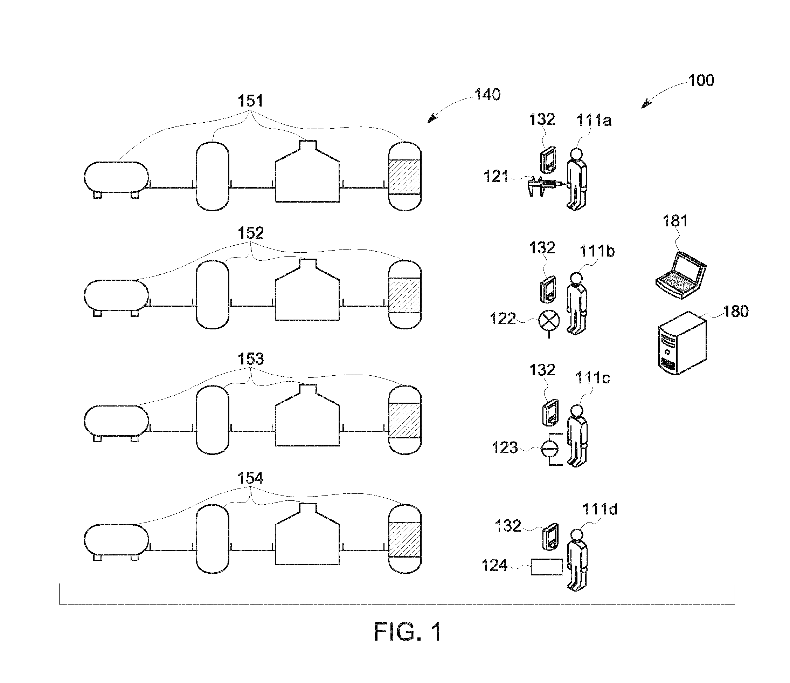

With the preceding general overview in mind, and turning to the figures, FIG. 1 illustrates an example of an environment 100 containing physical assets 140 (e.g., industrial or commercial equipment) to be inspected by one or more field inspectors 111a, 111b, 111c, and 111d. The environment 100 is provided as an example to show the complexities of monitoring and inspecting physical assets 140. In the depicted example, environment 100 is a processing facility containing physical assets 140 used to process raw and/or processed materials (e.g., industrial chemicals). Although environment 100 depicts a limited number and type of physical assets 151, 152, 153, and 154 to simplify the present discussion, it will be appreciated that the systems and methods described herein may be applied to any suitable environment 100 containing any number or variety of physical assets 140. Example of such environments include, but are not limited to: industrial environments, power generation and distribution environments, manufacturing environments, biotechnology environments, commercial sales environments, commercial distribution environments, transportation environments, residential environments, and agricultural environments.

In certain implementations, the field inspectors 111 use various types of measurement devices (e.g., metrological inspection devices) to take physical measurements and to obtain measurement data regarding physical assets 140. These physical measurements may include, but are not limited to, distance, volume, pressure, and velocity. Such evaluations may also involve making observations or measurements that may be further analyzed or extrapolated to determine the physical measurements of interest. Example of measurement devices include, but are not limited to, gauges, sensors, calipers, and so forth.

For instance, in the depicted example a caliper 121 is used by one inspector 111 to measure widths of cracks; a pressure gauge 122 is used to measure pressure levels of vessels; a level gauge 123 is used to determine the level of fluids in vessels, and a temperature gauge 124 is used to measure the temperature of respective physical assets. As will be appreciated, each field inspector 111 may have various types of measurement devices, depending on the measurements to be collected.

In certain embodiments, the field inspectors 111 record the measurements taken using the measurement devices to mobile computing devices 132. As used herein, the term "mobile computing device" refers to computing devices which are capable of being used in a portable manner including, without limitation, smart phones, personal digital assistants ("PDAs"), computer tablets, hybrid phone/computer tablets ("phablet"), or other similar mobile device capable of functioning in the systems described herein. In some examples, mobile computing devices may include a variety of peripherals and accessories including, without limitation, microphones, speakers, keyboards, touchscreens, gyroscopes, accelerometers, and metrological devices. Also, as used herein, "portable computing device" and "mobile computing device" may be used interchangeably.

In accordance with certain embodiments, measurements may be transmitted to and recorded on a mobile computing device 132 on which a preconfigured workflow (e.g., a workflow spreadsheet) has been loaded and which is displayed as part of an executing application. Measurement data, after or during collection, may be further consolidated on a monitoring server 180 which may be at a remote location relative to the field inspectors 111. For example, measurement data recorded on a mobile computing device 132 may be transmitted to monitoring server 180 at the conclusion of or as part of the inspection process.

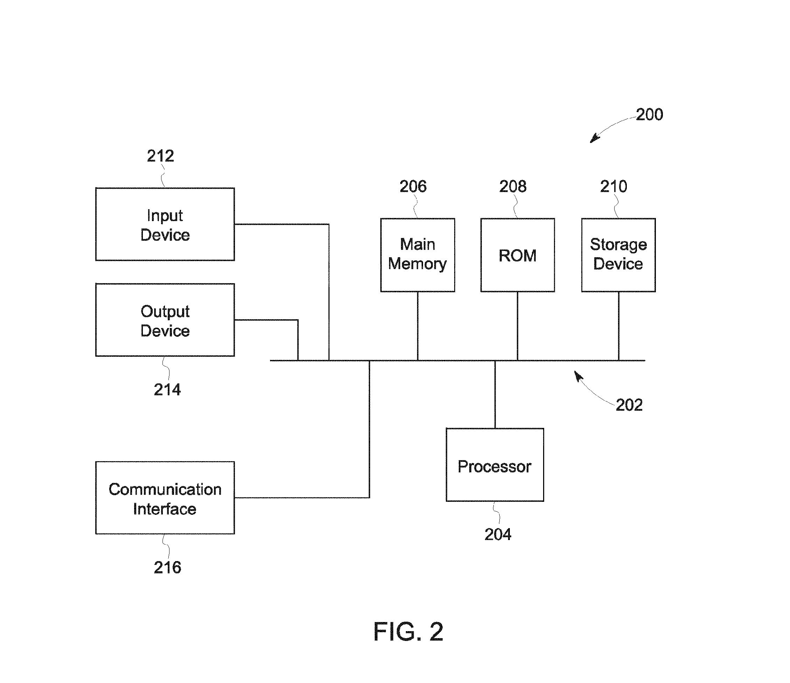

With respect to the mobile computing device 132, and turning to FIG. 2, a generalized block diagram of a computing device 200 is shown that may be used as a mobile computing device 132 for monitoring physical assets as discussed herein. In certain embodiments, the computing device 200 is configured to interact with one or more compatible metrological interface devices, such as using a universal wireless platform.

Computing device 200 may be physically embodied as one of various forms of processor based systems, including a cellular telephone, smart phone, tablet computer, laptop or notebook computer, personal digital assistant, and so forth that may be suitable for use as a mobile computing device 132. In some implementations, the computing device 200 may not be portable or mobile (e.g., a desktop, workstation, and so forth), but may still perform some or all of the functions discussed herein. The components depicted, their connections and relationships, and their functions, are provided only as representative examples, and are not meant to limit implementations of the subject matter described and/or claimed in this document.

In one embodiment, computing device 200 could be user mobile computing device 132 (or any of monitoring server 180 or recording computing device 181). Computing device 200, in the depicted example, includes a bus 202, a processor 204, a main memory 206, a read only memory (ROM) 208, a storage device 210, an input device 212, an output device 214, and a communication interface 216. Bus 202 may include a path that permits communication among the components of computing device 200.

Processor 204 may include any type of conventional or special purpose processor, microprocessor, or processing logic that interprets and executes instructions. For example, the processor may be implemented as chips that include one or more distinct analog and/or digital processors. Processor 204 can process instructions for execution within the computing device 200, including instructions stored in the memory 206 or on the storage device 210, such as instruction to display graphical information for a GUI on an external input/output device 214, such as a display. Similarly, in present embodiments, the processor 204 may execute code, instructions, routines, or algorithms stored in memory 206 or storage 210 for displaying a workflow or spreadsheet and/or for receiving and processing measurements as inputs in accordance with the formulas or equations defined in such a workflow or spreadsheet. In certain implementations, multiple processors and/or multiple buses may be used, as appropriate, along with multiple memories and types of memory. Also, multiple computing devices 200 may be connected, with each device performing different aspects of the described operations. For example, in certain embodiments, multiple computing devices 200 may be used to receive, process, and communicate information related to field inspections of physical assets 140.

Main memory 206 may include a random access memory (RAM) or another type of dynamic storage device that stores information and instructions for execution by processor 204. In one implementation, main memory 206 is a volatile memory unit or units. In another implementation, main memory 206 is a non-volatile memory unit or units. Main memory 206 may also be another form of computer-readable medium, such as a solid state memory device, or magnetic or optical media. ROM 208 may include a conventional ROM device or another type of static storage device that stores static information and instructions for use by processor 204.

Storage device 210 may include a magnetic and/or optical recording medium and its corresponding drive. The storage device 210 is capable of providing mass storage for the computing device 200. In one implementation, the storage device 210 may be or may contain a computer-readable medium, such as a floppy disk device, a hard disk device, an optical disk device, a solid state drive, or a tape device, a flash memory or other similar solid state memory device, or an array of devices, including devices in a storage area network or other configurations. A computer program product can be tangibly embodied on a data encoding medium. The computer program product may also contain instructions that, when executed, perform one or more operations, such as those described herein. The data encoding medium is a computer- or machine-readable medium and may be one or more of a main memory 206, ROM 208, the storage device 210, or memory on processor 204.

As used herein, the term "non-transitory" with respect to a computer-readable media or storage device is intended to encompass any suitable tangible computer-based device implemented in any method or technology for short-term and long-term storage of information, such as, computer-readable instructions, data structures, program modules and sub-modules, or other data stored and accessible in a suitable device. Therefore, the methods described herein may be encoded as executable instructions embodied in a tangible, non-transitory, computer readable medium, including, without limitation, a storage device and/or a memory device, including optical, solid state, and magnetic storage or memory devices. Such instructions, when executed by a processor, cause the processor to perform at least a portion of the methods described herein. Moreover, as used herein, the term "non-transitory computer-readable media" includes all tangible, computer-readable media, including, but not limited to, non-transitory computer storage devices, examples of which include, but are not limited to, volatile and nonvolatile media, and removable and non-removable media such as a firmware, physical and virtual storage, CD-ROMs, DVDs, and any other digital source such as a network or the Internet, as well as yet to be developed digital means, with the sole exception being a transitory, propagating signal. In addition, as used herein, the terms "software" and "firmware" are interchangeable, and include any computer program stored in memory or embodied in circuitry for execution by devices that include, without limitation, mobile devices, clusters, personal computers, workstations, clients, and servers.

In one implementation, a high speed controller manages bandwidth-intensive operations for the computing device 200, while a low speed controller manages lower bandwidth-intensive operations. Such allocation of functions is for purposes of example only. In one implementation, the high-speed controller is coupled to main memory 206, display 214 (e.g., through a graphics processor or accelerator), and to high-speed expansion ports, which may accept various expansion cards (not shown). In the implementation, low-speed controller is coupled to storage device 210 and low-speed expansion port. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

Input device 212 may include a conventional mechanism that permits computing device 200 to receive commands, instructions, or other inputs from a user, such as field inspector 111, including visual, audio, touch, button presses, stylus taps, etc. Additionally, input device 212 may receive location information. Input device 212 may include, for example, a camera, a microphone, one or more buttons, a touch screen, and/or a GPS receiver. Output device 214 may include a conventional mechanism that outputs information to the user, including a display (including a touch screen) and/or a speaker.

Communication interface 216 may include any transceiver-like mechanism that enables computing device 200 to communicate with other devices and/or systems, including measurement devices and/or other computing devices, as discussed herein. For example, communication interface 216 may include mechanisms for communicating with another device or system via a network or via wireless signals. In certain embodiments, communication interface 216 may include analog or digital signal processing circuitry where necessary. In one embodiment, communication interface 216 provides for communication using Bluetooth® Low Energy ("BLE") or Bluetooth SMART®. Communication interface 216 may also provide for communications under various modes or protocols, such as 802.11b, ZigBee®, GSM voice calls, SMS, EMS, or MMS messaging, CDMA, TDMA, PDC, WCDMA, CDMA2000, or GPRS, among others. Such communication may occur, for example, through a radio-frequency (RF) transceiver. In addition, short-range communication may occur, such as using a Bluetooth®, WiFi, or other such transceiver. In addition, a GPS (Global Positioning system) receiver module may provide additional navigation-and location-related wireless data to computing device 200, which may be used as appropriate by applications running on computing device 200.

In view of the functionality and components described above, computing device 200 may facilitate the acquisition of measurement data, such as from metrological sensing devices. For example, computing device 200 may facilitates the workflow or process by which such data is obtained and analyzed at an equipment site. Computing device 200 may perform these and other operations in response to processor 204 executing software instructions contained in a computer-readable medium, such as memory 206. The software instructions may be read into memory 206 from another computer-readable medium, such as data storage device 210, or from another device via communication interface 216. The software instructions contained in memory 206 may cause processor 204 to perform processes described herein, such as display a workflow for measurement acquisition or process measurements obtained in response to such a workflow. Alternatively, hardwired circuitry may be used in place of or in combination with software instructions to implement processes consistent with the subject matter herein. Thus, implementations consistent with the principles of the subject matter disclosed herein are not limited to any specific combination of hardware circuitry and software.

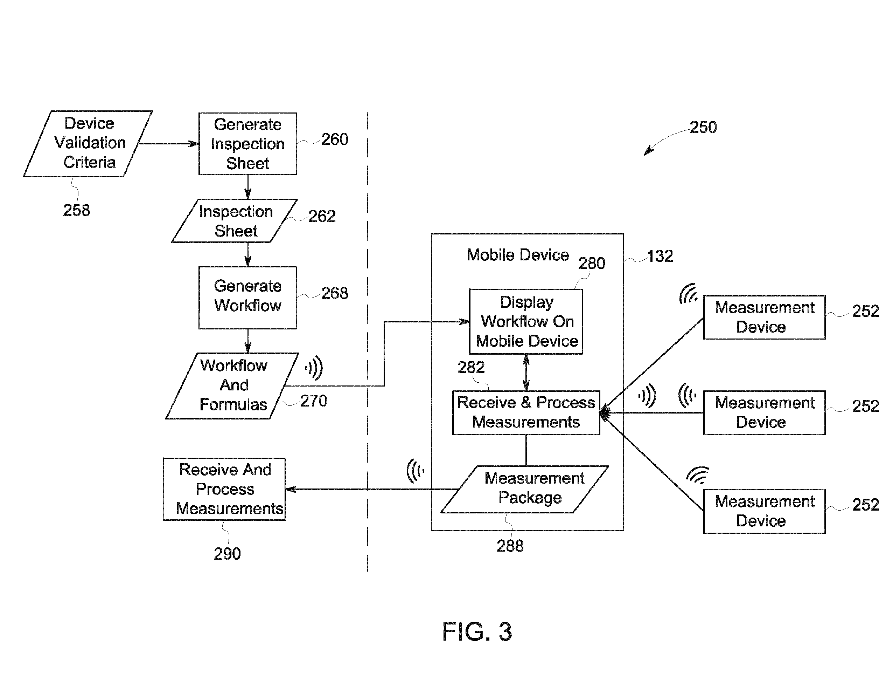

With the preceding discussion in mind, and turning to FIG. 3, a process flow 250 is depicted showing the communications between one or more measurement devices 252 and mobile device 132 and between the mobile device 132 and a remote service facility. As will be appreciated, when more than one measurement device 252 is present, each device may be designed to measure a different operational parameter of interest and to communicate any acquired measurements to the mobile device 132.

Further, it should also be understood that, in such contexts, different measurement devices may be operated by different engineers either concurrent with one another or in an alternating or sequential manner. That is, the measurement devices 252 may be operated by different engineers working cooperatively to generate the measurements transmitted to the mobile device 132 and used to fill in a single workflow, as discussed herein. In such instances, measurements obtained by different measurement devices 252 may be automatically recognized and processed in accordance with the type of measurement and placed in the appropriate field of the workflow being processed, as discussed below.

In this example, one or more device validation criteria 258 may be determined that may be of interest in assessing or evaluating a piece of equipment at a remote or field location, such as at a customer installation site or facility. The device validation criteria may be derived from design specifications for the equipment of interest and/or may be generated by a design engineer familiar with the equipment. The device validation criteria may represent values or measurements that may be used to evaluate the operation of the equipment in question, such as to determine the existence of one or more fault conditions and their respective causes or, correspondingly, to determine that the equipment is operating within the desired tolerances. For example, for a piece of mechanical equipment, such as a turbine, various clearances between moving or rotating components may be specified in the design documents and may constitute criteria for validating the proper operation of the equipment. Similarly, temperatures, pressures, and other operational parameters may constitute criteria upon which the device or equipment in question may be validated.

The device validation criteria may be used, such as by a design engineer, to generate (block 260) an inspection sheet 262. The inspection sheet 262 may list a set of measurements and observations to be made by an on-site field engineer when inspecting a piece of equipment as part of a service call or installation. The inspection sheet 262, in certain embodiments, also lists an order in which the measurements or observations should be acquired. This order may be determined so as to reduce downtime of the equipment, or based upon other criteria, such as based upon the perceived or expected efficiency of a given order relative to other orders.

Based upon the inspection sheet 262, suitable personnel, such as a design engineer, may generate (block 268) a workflow 270 which may (or may not) include one or more formulas that process raw or processed measurements provided as inputs. The workflow 270, in certain embodiments, may be generated as a spreadsheet or other generalized arrangement of cells or fields (e.g., a table having columns and rows of cells), with the workflow generally corresponding to the sequential arrangement or ordering of the cells (e.g., the sequential arrangement of rows may correspond to the order in which measurements or observations are to be acquired). Formulas and/or data may be entered in one or more of the cells.

To the extent formulas may be provided, a formula provided in a cell may reference the values present in other cells. For example, a formula may reference one or more measurements stored in other cells (such as to perform a conversion or comparison based on the referenced measurements) and/or may reference one or more values generated by formulas in other cells (such as to compare a formula or cell output against a threshold condition). As will be appreciated, formula outputs may be quantitative in nature (e.g., a numeric value) or may be qualitative in nature (e.g., yes/no, true/false, in range/out of range, and so forth). As used herein, measurements in the context of the workflow may be characterized as raw or unprocessed when in their originally input form and as processed when modified or altered by operation of a formula (such as a apply a calibration, correction, or conversion). For example, in some circumstances optical data, such as geographic coordinates obtained in reference to an asset, may be obtained which is not useful in its raw form but which, when processed, may yield physical measurements of interest.

Thus, as used herein, the workflow 270 may be characterized as a spreadsheet or table in which a design engineer or similar party has ordered a series of measurements or observations to be obtained and has provided, if needed, one or more formulas to assist in the evaluation of the measurements or observations. This assistance may take the form of converting a measurement to another form, calibrating the measurement based on a known function, performing a correction or noise reduction on the measurement, and so forth. Similarly, the evaluation assistance may take the form of comparing a raw or processed measurement to an expected value or to a specified threshold and generating an error or fault condition if the raw or processed measurement is outside expected tolerances. Such indications may be binary in nature (e.g., within tolerance or outside tolerance) or may be graded in nature (e.g., within tolerance by Z%, within tolerance by Y%, at tolerance, outside tolerance by X%, outside tolerance by W%, and so forth). Such indications may be indicated quantitatively using a numeric value or qualitatively using words, colors, letters, and so forth.

In the depicted example, the workflow 270 is sent (such as via a wired or wireless network connection) to a field engineer or other personnel who are either at the site of the equipment to be evaluated or who will be traveling to the site. In particular, the workflow 270, in the depicted example, is transmitted to a mobile device 132 (such as a laptop, tablet computer, cellular telephone, and so forth) which will be used by the field engineer to acquire the measurements specified by the workflow 270.

In one implementation, the mobile device 132 executes an app or application that receives and displays the workflow 270 in a suitable form for use by the field engineer. For example, the mobile device 132 may execute a general purpose spreadsheet application suitable for receiving and displaying the workflow 270 as a spreadsheet or other arrangement of cells, as well as for executing any formulas or equations embedded in the workflow. Alternatively, the mobile device, in other embodiments, may execute a special purpose app or application designed specifically for implementing the workflows 270 discussed herein.

In the depicted example, the workflow 270 is displayed (block 280) on the mobile device 132. In this manner, the field engineer or other user may refer to the mobile device 132 and displayed workflow to determine what measurement or observation to next record. In one implementation, the entire workflow 270 may be displayed for viewing by the field engineer. Though in other implementations, only a portion of the workflow 270 may be displayed at one time. Indeed, in certain embodiments, only the current measurement to be obtained (or the current and next measurement) may be displayed at a given time.

In practice, as measurements are obtained (block 282) by one or more engineers using the appropriate measurement devices 252, the corresponding measurements may be input to the appropriate field of the workflow 270 displayed on the mobile device 132 and a field corresponding to the next measurement may then be displayed or given focus as the ready field. For example, if a first measurement and a second measurement are to be obtained in sequence, once the first measurement is received, focus may shift to the field for the second measurement (i.e., the next measurement) or the mobile device 132 may transition from displaying the first measurement field to the second measurement field. Focus may be indicated by the presence of a cursor or some other suitable visual indicator. In this manner, obtaining the specified measurements in the desired sequence may be facilitated as the mobile device 132 sequentially displays the current measurement to be obtained by the field engineer. It should also be understood that at step 282 logic may be applied which recognizes the type of measurement being received (such as from header information or other embedded information identifying the type of measurement or measurement device 252) and which processes the measurement accordingly, such as by applying a measurement from a given type of measurement device to an appropriate field or formula of the workflow 270.

Further, as shown at block 282, the measurements received at the mobile device 132 may be processed, such as by execution of a formula or equation stored in the workflow that references the measurement. For example, a formula in the workflow 270 may perform a calibration on the measurement based on a known calibration function for a respective measurement device 252 or for the equipment being serviced. Similarly, a measurement obtained in one type of measurement unit may be converted to a different unit of measurement or used to derive some other value which may be of greater diagnostic interest. For example, in one simplistic example, a measured diameter or radius may be used to derive a circumference, area, or volume. In addition, processing of the measurements may include comparing the measurement (or a value derived from the measurement) to one or more threshold criteria that may be of diagnostic interest, such as whether a measurement is within or outside of tolerances or in alignment.

With respect to the measurements themselves, in the depicted example the measurements are input directly to the workflow 270 running on mobile device 132 from one or more respective measurement devices 252. As used herein, a measurement device 252 refers to tools, devices, and other apparatus capable of measuring or otherwise determining measurement data. In certain embodiments, the measurement device may be manual or electronic in terms of operation, and is capable of transmitting asset data to a separate electronic device, such as mobile device 132. In some examples, measurement devices 252 may include a display, a processor, and a memory device. Additionally, measurement devices may produce analog data and digital data. In at least some examples, measurement device 252 produces complex data which requires computation to decode into physical measurement data. By way of example, the measurement device 252 may be a metrological inspection device equipped with wireless communication functionality such that upon an indication from the field engineer that a measurement is complete, the measurement data is sent to the mobile device 132 for input into the current measurement field of the workflow. In practice, however, measurement data may be input to the mobile device 132 in any suitable manner, including manual entry of the measurement by the field engineer, voice entry or recording, optical scanning or reading of a measurement, and so forth.

In the depicted example, a data set of the measurements (i.e., a measurement package 288) may be assembled containing some or all of the measurements specified by the workflow 270. In one embodiment, the mobile device 132 may send such a package 288, wirelessly or via other communication protocols, to a remote diagnostic facility. For example, the measurement package 288, in such an embodiment, may be sent to the design engineer who generated the workflow 270 or to similar personnel. In such a context, the remote location may receive and process (block 290) the measurement package 288 to evaluate the performance or status of the equipment undergoing evaluation. For example, a determination as to the existence of any operational problems, predicting of developing or pending problems, or assessment of various performance measures may be generated at the remote location. Based on these analyses, further instructions may be provided to the on-site field engineer. As discussed in greater detail below, in other embodiments, some or all of this analytic functionality may be provided in the workflow 270 executing on the mobile device 132, and thus may be available to the field engineer without additional consultation with the remote service facility.

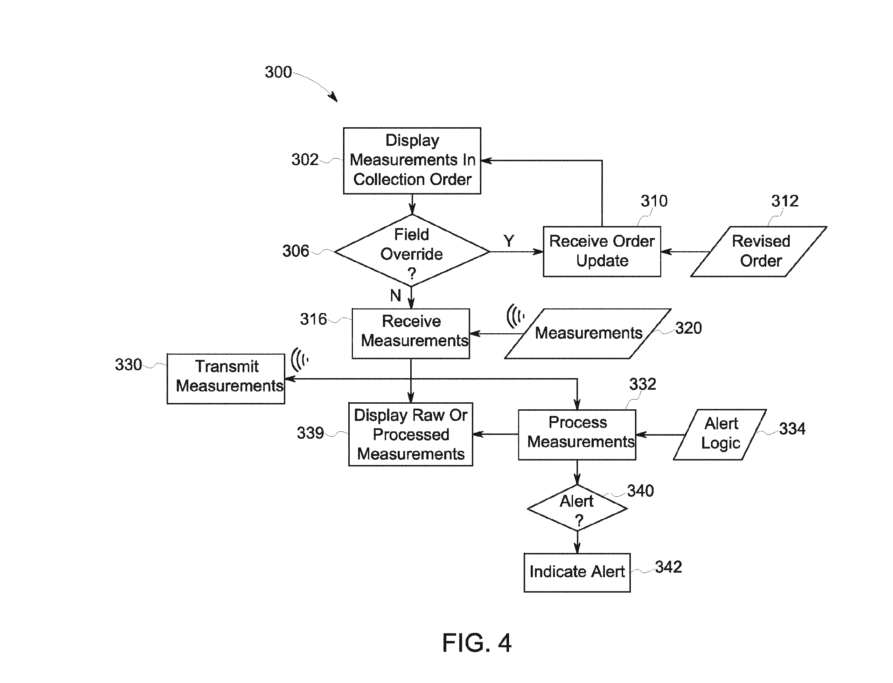

By way of further discussion of implementations of the present approach, and turning to FIG. 4, a process flow 300 is depicted of operations that may be performed on the mobile device 132. In this example, the mobile device 132 displays (block 302) the measurement fields in collection order, i.e., in the order in which the measurements are to be collected. The user of the mobile device 132 (e.g., a field engineer) may, in the process of obtaining measurements, override (block 306) this order to obtain one or more of the measurements out of order.

For example, in the event the field engineer, either from personal experience or due to factors on-site, determines that a measurement should be skipped until later or that the measurement order should for whatever reason change, the field engineer may override (block 306) the order specified in the workflow 270. In the event of such an override, the mobile device 132 may receive (block 310) an update 312 to the order in which measurements 320 are to be collected. For example, the field engineer may opt to "skip" a current measurement, or may "drag-and-drop" (or otherwise rearrange) the specified order of measurements in the workflow. Alternatively, the field engineer may simply navigate to the desired next measurement and proceed to obtain the measurement. In view of the update, the revised order may be displayed (block 302).

Based on the revised order (or the original order if no override was generated), the mobile device 132 may receive (block 316) measurements 320. For example, as discussed above, the measurements 320 may be received from one or more measurement devices 252 themselves (either via a wired or wireless connection) or via a manual, verbal, optical, or other input provided by the field engineer. As used herein, measurements 320 and related terms refer to any data, measurement, or observation related to at least one physical state of an asset under evaluation. Such data or measurements may include, but are not limited to, physical measurements of distance, physical measurements of volume, physical measurements of pressure, physical measurements of temperature, location information, physical measurements of electrical parameters (e.g., current, resistance, voltage, capacitance, inductance, and so forth), and any other physical measurements which may be detected using a measurement device 252.

Once received, the measurements 320 may be handled in a variety of ways by the mobile device 132. In certain instances, where different types of measurement devices 252 are employed in implementing a given workflow, such as by different engineers working cooperatively, receipt of the measurements may include a step of identifying the type of measurement or measurement device from the communicated information and handling the measurement 320 in accordance with this information. In the depicted example, in one instance the mobile device 132 may simply transmit (block 330) the measurements 320 (in a raw or processed from) to another site (such as to a remote service facility) for storage or further analysis. For example, the measurements 320 may be transmitted to a site or facility where one or more additional engineers (such as design engineers) are present who will analyze the measurements for indications of current or pending problems.

In addition or in the alternative, the measurements 320, once received into the workflow 270 executing on the mobile device 132 may be processed (block 332) as discussed herein. For example, based on one or more formulas or equations provided in the workflow 270, the measurement 320 may be used to derive another a different measure of greater diagnostic interest. One or both of the raw measurement or a measurement derived in this manner may be displayed (block 334) on the mobile device 132 in conjunction with the workflow.

In addition, as noted above, certain formulas or equations provided in the workflow 270 may provide for the evaluation of a measurement 320 (or corresponding derived measurement) based on alert logic 336 (e.g., one or more thresholds or other comparative criteria to determine if a measurement or derived measurement is within tolerance or expectations). In the depicted example, the alert logic may be present in or proved to the worksheet and may be used in the processing (block 332) or the measurements 320. Based on the processing of the measurement 320 in view of the alert logic 336 a determination (block 340) may be made as to whether an alert condition exists. In no alert condition is determined to exist, no action may be taken and the measurement process may continue. If, however, an alert condition is determined to exist, an alert may be indicated (block 342) (e.g., visually or audibly) on the mobile device 132 to notify the user.

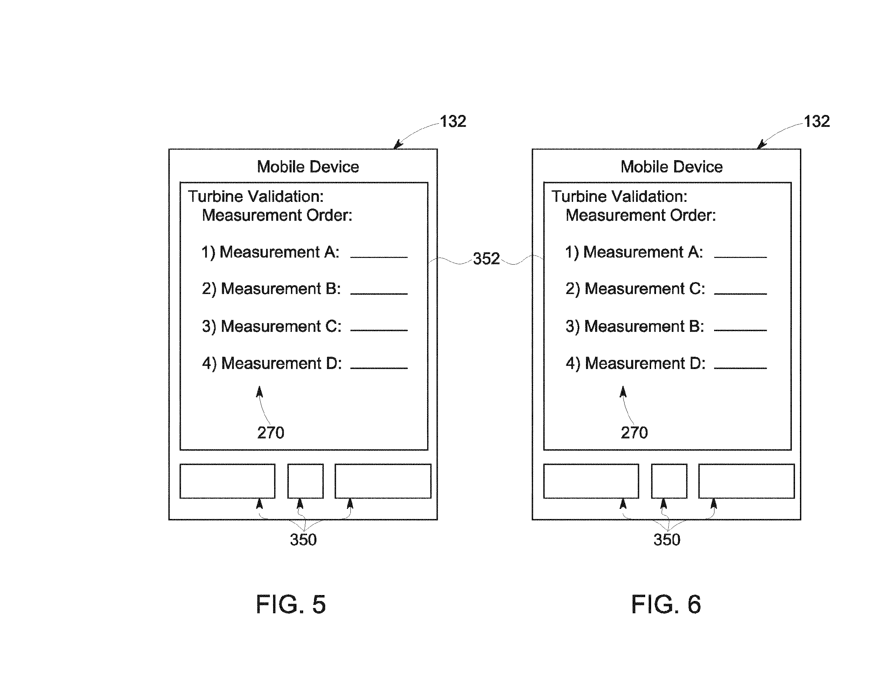

With the preceding discussion in mind, FIGS. 5-8 depict various examples of displayed workflows 270. Turning to FIG. 5, in this example, a mobile device 132 with a display 352 is shown. Buttons or input features 350 are also shown as part of the mobile device 132 and may be used by the field engineer in operation of the deice 132. On the display 352, a workflow 270 is depicted listing four measurements (A - D) to be obtained in sequence by a field engineer using the mobile device 132 in order to validate a piece of equipment (a turbine in this example).

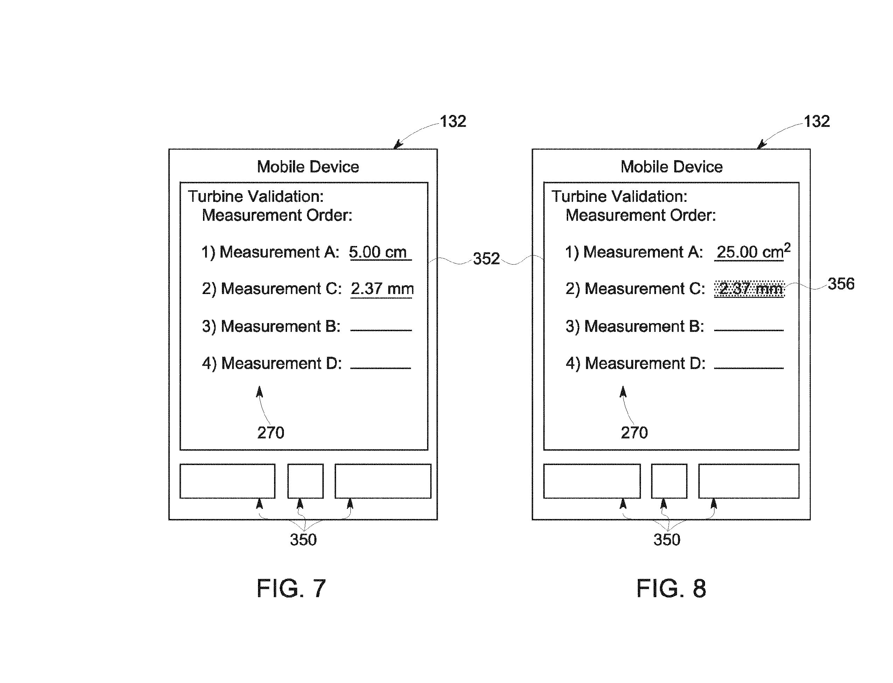

Turning to FIG. 6, in this example, the field engineer has overridden the displayed order to move Measurement C up in the sequence ahead of Measurement B. In view of this local override, the displayed order of measurements to be obtained has been changed relative to the order shown in FIG. 5. Turning to FIG. 7, in this example, the field engineer has obtained the first two measurements. The measured values are shown in the respective fields for Measurement A and Measurement C.

Turning to FIG. 8, in this example, internal logic embedded within the workflow 270 has operated on the obtained measurements. In particular, with respect to Measurement A, a formula or equation embedded in the workflow 270 (such as in a cell of a table on which the displayed workflow 270 is based) has operated on the raw measurement (e.g., 5.00 cm) to perform an operation. In the depicted example, the raw measurement was squared to generate a derived measurement (e.g., 25.00 cm²). The derived measurement may then be displayed instead of or in addition to the raw measurement. Similarly, either or both of the raw or derived measurement may be used as inputs to other formulas of the workflow 270.

With respect to Measurement C, embedded logic within the workflow 270 has performed a comparison of the measured value (e.g., 2.37 mm) versus some specified criteria or threshold. In this example, for the purpose of illustration, the measured value has been determined, based on the logic embedded within the workflow executing on the mobile device 132, to be outside of a specified tolerance. To raise this issue to the field engineer's attention, a visual indicator, here visual highlight 356 is displayed with the measurement to indicate a problem. In different embodiments, different visual or audible indicators may be employed. For example, different colors or shades of indicators 356 may be used to indicate the degree to which the measurement is outside tolerances or deviates from expectations.

Technical effects of the invention include use of a mobile computing device to implement a workflow to be followed when conducting an examination of installed equipment on-site. The workflow may be generated remote from the equipment site and specifies an order in which measurements are to be obtained. The workflow may incorporate formulas or equations for processing some or all of the measurements and which may be evaluated on the mobile device itself.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method for acquiring sequential measurements, comprising:
   on a mobile processor-based system:
      receiving a workflow generated at a remote site, wherein the workflow comprises a sequence of measurements to be obtained;
      displaying the workflow on the mobile processor-based system;
      in the sequence specified by the workflow, receiving and entering a plurality of measurements; and
      as each measurement is received, displaying the respective measurement or a value derived from the respective measurement in a corresponding field of the displayed workflow.
2. The method of clause 1, wherein the workflow comprises an arrangement of cells table or is generated from the arrangement of cells.
3. The method of clause 1 or clause 2, wherein the workflow is received on the mobile processor-based system via a wireless network connection.
4. The method of any preceding clause, wherein the workflow further comprises one or more formulas, wherein each formula references at least one measurement of the workflow
5. The method of any preceding clause, wherein at least one of the formulas processes a referenced measurement so as to convert, calibrate, or correct the referenced measurement.
6. The method of any preceding clause, wherein at least one of the formulas compares a respective measurement or a value derived from the respective measurement to an alert criterion.
7. The method of any preceding clause, further comprising:
   providing an alert indication if the alert condition is met.
8. The method of any preceding clause, further comprising:
   receiving an update to the order specified by the workflow; and
   altering the sequence of measurements based on the update.
9. The method of any preceding clause, further comprising:
   generating a measurement package comprising the plurality of measurements; and
   transmitting the measurement package to the remote site or to a different remote site.
10. The method of any preceding clause, wherein the plurality of measurements are received wirelessly from one or more measurement devices configured to communicate wirelessly with the mobile processor-based system.
11. The method of any preceding clause, wherein the plurality of measurements are generated by one or more individuals, each generating a different set of measurements.
12. A processor-based device, comprising:
   a display;
   a communication interface;
   a memory storing one or more routines; and
   a processing component configured to execute the one or more routines stored in the memory, wherein the one or more routines, when executed by the processing component, cause the processing component to:
      receive a workflow via the communication interface, wherein the workflow comprises a sequence of measurements to be obtained;
         display the workflow on the display;
      receive and enter a plurality of measurements in the sequence specified by the workflow, wherein some or all of the measurements are received wirelessly via the communication interface; and
      display the respective measurement or a value derived from the respective measurement in a corresponding field of the displayed workflow.
13. The processor-based device of any preceding clause, wherein the processor-based device comprises a smart phone, personal digital assistant, computer tablet, hybrid phone/computer tablet, or laptop computer.
14. The processor-based device of any preceding clause, wherein the workflow comprises a spreadsheet table configured to opened and run on an app or application present on the processor-based device.
15. The processor-based device of any preceding clause, wherein the workflow comprises one or more formulas that convert, calibrate or correct one or more of the measurements when executed by the processing component.
16. The processor-based device of any preceding clause, wherein the workflow comprises one or more formulas that compare one or more measurements to an alert criterion and indicate an alert if the alert criterion is met.
17. The processor-based device of any preceding clause, wherein the one or more routines, when executed by the processing component, further cause the processing component to reorder the sequence of measurements in response to a user input received via an input structure of the processor-based device.
18. A non-transitory, tangible computer-readable medium encoding processor-executable routines, wherein the routines, when executed by a processor cause acts to be performed comprising:
   receiving a workflow specifying a sequence of measurements to be obtained, wherein the workflow comprises a table or is generated from the table;
   displaying the sequence of measurements on a display of a mobile device;
   wirelessly receiving and entering one or more measurements in the sequence specified by the workflow; and
   as each measurement is received, displaying the respective measurement or a value derived from the respective measurement in a corresponding field of the displayed workflow.
19. The non-transitory, tangible computer-readable medium of any preceding clause, wherein the workflow comprises one or more formulas executed by the processor, wherein the one or more formulas reference one or more of the measurements and are executed as the referenced measurements are obtained.
20. The non-transitory, tangible computer-readable medium of any preceding clause, wherein the one or more formulas generate derived values based on the referenced measurements or determine whether the referenced measurement is within a specified tolerance.
21. The non-transitory, tangible computer-readable medium of any preceding clause, wherein the routines, when executed by the processor cause acts to be performed comprising rearranging the sequence of measurements in response to an input received from a user.

## Claims

1. A method (250) for acquiring sequential measurements, comprising:
on a mobile processor-based system (132):
receiving a workflow (268) generated at a remote site, wherein the workflow (268) comprises a sequence of measurements to be obtained;
displaying (280) the workflow (268) on the mobile processor-based system (132);
in the sequence specified by the workflow (268), receiving and entering a plurality of measurements (282); and
as each measurement is received, displaying (280) the respective measurement or a value derived from the respective measurement in a corresponding field of the displayed workflow (268).

2. The method (250) of claim 1, wherein the workflow (268) comprises an arrangement of cells table or is generated from the arrangement of cells.

3. The method (250) of any preceding claim, wherein the workflow (268) is received on the mobile processor-based system (132) via a wireless network connection.

4. The method (250) of any preceding claim, wherein the workflow (268) further comprises one or more formulas, wherein each formula references at least one measurement of the workflow (268).

5. The method (250) of claim 4, wherein at least one of the formulas processes a referenced measurement so as to convert, calibrate, or correct the referenced measurement.

6. The method (250) of claim 4 or claim 5, wherein at least one of the formulas compares a respective measurement or a value derived from the respective measurement to an alert criterion.

7. The method (250) of claim 6, further comprising:
providing an alert indication if the alert condition is met.

8. The method (250) of any preceding claim, further comprising:
receiving an update to the order specified by the workflow (268); and
altering the sequence of measurements based on the update.

9. The method of (250) any preceding claim, further comprising:
generating a measurement package (288) comprising the plurality of measurements; and
transmitting the measurement package (288) to the remote site or to a different remote site.

10. The method (250) of any preceding claim, wherein the plurality of measurements are received wirelessly from one or more measurement devices configured to communicate wirelessly with the mobile processor-based system (132) .

11. The method (250) of any preceding claim, wherein the plurality of measurements are generated by one or more individuals, each generating a different set of measurements.

12. A processor-based device (132), comprising:
a display;
a communication interface (216);
a memory storing (206) one or more routines; and
a processing component (204) configured to execute the one or more routines stored in the memory, wherein the one or more routines, when executed by the processing component, cause the processing component to:
receive a workflow (268) via the communication interface, wherein the workflow (268) comprises a sequence of measurements to be obtained;
display the workflow on the display;
receive and enter a plurality of measurements in the sequence specified by the workflow (268), wherein some or all of the measurements are received wirelessly via the communication interface (216); and
display the respective measurement or a value derived from the respective measurement in a corresponding field of the displayed workflow (268).

13. The processor-based device (132) of claim 12, wherein the processor-based device comprises a smart phone, personal digital assistant, computer tablet, hybrid phone/computer tablet, or laptop computer.

14. The processor-based device (132) of claim 12 or claim 13, wherein the workflow (268) comprises a spreadsheet table configured to opened and run on an app or application present on the processor-based device.

15. The processor-based device (132) of any of claims 12 to 14, wherein the workflow (268) comprises one or more formulas that convert, calibrate or correct one or more of the measurements when executed by the processing component (204).
